# EUROPEAN PATENT APPLICATION

(11) **EP 4 659 940 A1**
(43) Date of publication of application: **10.12.2025**
(21) Application number: 24180598.5
(22) Date of filing: 06.06.2024
(51) Int. Cl.: B29C 65/20, B29C 65/30, B29C 65/00, B29C 65/06, B29L 31/00

(54) **METHOD FOR WELDING, DEVICES AND MACHINE FOR WELDING**

(71) Applicant: Awgtech Spolka z Ograniczona Odpowiedzialnoscia, 48-303 Nysa (PL)
(72) Inventor: WOJTASIK, Kamil, 48-300 Nysa (PL)
(74) Representative: JWP Patent & Trademark Attorneys

(57) **Abstract**

The subject of the present invention is a method for welding, especially of window or door frames from PVC profiles and/or from other weldable plastic materials, and devices for welding, and a machine for welding profiles that implement a method according to the present invention. A punch (3) for forming a weld (4) resulting when welding profiles (2) comprises a forming face (30) and a pressing element (31), wherein the pressing element comprises vibrating means constituting an oscillation generator module (33) of the forming face. A heating plate module (1) for welding profiles (2) comprises a heating plate (10), wherein the heating plate (10) comprises first and second heater surfaces (11, 12) and a heating element arranged between the heater surfaces such that it provides heat flow, wherein the heating plate module further comprises vibrating means constituting an oscillation generator module (33) of the forming face which is connected to the heating plate (10). A machine for welding profiles (2) comprises a base, at least one welding head which comprises a positioning arrangement and pressing means adapted to receive receive the profiles (2) being welded and press them mutually in the course of the welding, wherein the welding head comprises a heating plate module and overfill outflow limiting means, wherein the welding head comprises vibrating means such that the heating plate module constitutes the heating plate module (1) and/or the overfill outflow limiting means are the at least one weld-forming punch (3). A method for welding profiles is characterized in that with the simultaneous pressing of the profiles (2) to the heating plate (10) and/or in during the pressing of the overfill outflow limiting means, there occurs a setting of the vibrating means into oscillatory vibrations.

## Description

The subject-matter of the present invention is a method for welding, especially of window or door frames from PVC profiles and/or other weldable plastic materials, and devices for welding, and a machine for welding profiles that implement a method according to the present invention.

The technology of producing window or door frames from PVC profiles has been known for many years. Among the known methods for welding, one may mention welding by a heater, also called a heating mirror, or welding with shaping knives which are often also heated. When welding PVC profiles utilizing these known methods, a number of problems arise. In the first method, there may be an occurrence of an imperfect weld and a nonhomogeneous surface of the weld, which leads to a decrease in the strength of the connection and a defective finish. In the second method, the outflowing material is trimmed, which may lead to sharp edges and imperfections resulting on the surface of the weld, and also causes limitations in the shaping of the profiles.

In both cases, there is no effective way to even the surface of the weld, which leads to further problems with the finish, especially in the case of bright and light-reflective profiles. The disadvantage of the known solutions is the "one-time" forming which ceases once the profile has cooled. Typically, in order to obtain the final product, additional stations for processing the surface of the weld are used - it can be a manual or mechanical processing.

Application document EP3674065A1 discloses a device and method for welding two profile rods made from a plastic material. After preparing the profile bars, the at least one profile bar, especially in the area of the bevel, is subjected to processing by means of a machining knife. Then, the profile rods are heated at least on their bevel surfaces, and finally the bevel surfaces of the profile rods are connected in such a manner that the warmed-up areas of the bevel surfaces cause a connection of the material of the profile rods.

Application document EP0264052A2 discloses a method for welding profiles. Before welding, the ends of both profiles are shaped in such a manner that two areas are created in each case. An inner area has a front end surface which is heated by the heated plate, whereas a side area adjacent to the inner area has an skew end surface. In this manner, during welding, a weld bead results only on the side of the inner area, whereas no weld bead (overfill) is created on the side of the side area.

Patent document EP3116704B1 discloses a machine for welding corners of profiles from PVC which is comprised of a catch group comprising a main body of the catch group, a spring, a bearing and a spacer, a milling cutter group comprising a cutting blade-connecting shaft, a cutting blade, a padding element, a main body, a movement transmitter belt and a first servo motor, a second servo motor enabling an up-down movement of the group of the catches, the group of the milling cutters and a horizontal punch, a third servo motor enabling a reciprocating movement of the group of the catches, the group of the milling cutters and a horizontal channel abutment, and a fourth servo motor enabling a movement of movable plates. The disadvantage of this solution is the combination of all the tools into one structure, and this reduces the time of switching between the subsequent stages of the profile-welding process.

The publication Gerdeen, J. C., Rorrer, R. A. L., Engineering Design with Polymers and Composites (2nd Edition). 2nd ed. Bosa Roca: Taylor & Francis, 2012. Web. (DOI:10.1201/9781420056372) discloses friction welding techniques which include: linear vibrations, orbital welding, angular oscillations, and centrifugal welding. All the four techniques utilize friction heating to melt the components under pressure in order to mix them.

Patent document US7343950B2 discloses a method and apparatus for vibratory welding of thermoplastic elements. Welded vibratory connections are created between first and second elements of a thermoplastic material by arranging a connecting element from a similar material and oscillating the element of the joint at a high speed, while pressing the first and second elements in a controlled manner onto opposite sides of the element of the joint. The friction generated by the vibrations generates heat which melts a small amount of the material contact surfaces, which upon cooling, provides a firm welded connection with a minimal flash. Entire frame systems, such as window frames, can be produced by a system which creates a welded friction connection between neighbouring ends of the elements of the frame. Moreover, the frame can be made around a panel, such as a glazing panel. The welded connections created by the system do not spoil the finish of the elements of the frame and do not produce unsightly residues requiring subsequent processing steps in order to remove them.

The disadvantage of the known solutions is the repeatability of the process being the sensitive to the composition of the mix of the material from which the elements being welded are made. Another problem of the described method is the maintenance of temperature stability which is a key factor in the welding process and has a key influence on the subsequent strength characteristics of the elements being welded with each other. The method described in the known sources does not guarantee this.

Application document EP3795339A1 discloses a device and method for removing material outside the welding zone. The disclosure relates to a heating element for warming profiles from plastic materials before connecting them by welding, consisting of at least one contact plate with a contact surface directed towards at least one profile from a plastic material, at least one heating element which is actively connected to the contact plate, wherein the contact plate has at least one recess which is disposed in the contact surface and which interrupts the contact surface, wherein the recess is completely penetrated by the contact plate or the recess has a floor surface. The disclosure also relates to a device for welding profiles from plastic materials with a heating element, as well as a method for welding profiles from plastic materials, in particular using the device in accordance with the disclosure. The device lends itself for removing material outside the welding zone of one or more profiles from a plastic material.

In order to solve the problems encountered in the prior art, the present invention provides a method and devices which enable to make durable welded connections with particularly good mechanical parameters and significant aesthetic qualities. At the same time, the method and devices provide a reduction in the time needed to make a weld with the elevated qualities. Additionally, the present invention provides an easier-to-handle device which requires fewer maintenance actions, and hence can be used in a fully automated production line. The said solutions to the technical problems also have an influence on reducing the production costs through automation, the increasing production speed and the energy consumption.

A punch for forming a weld resulting when welding profiles of window or door frames, according to the present invention, comprises a forming face and a pressing element and is characterized in that the pressing element comprises vibrating means constituting an oscillation generator module of the forming face which is adapted to set the forming face into oscillations.

Preferably, the punch for forming a weld according to the present invention comprises a heater module which heats the surface of the forming face. Wherein the heater module does not act to weld but to facilitate the forming by preventing the surface of the weld from cooling too quickly. Thanks to the heater module in the forming punch, there exists a possibility to reheat the edges of the surfaces being welded in order to correct a corner on the already welded element.

It is preferable that the forming face comprises a protrusion for forming a corner of the profiles being welded, preferably the protrusion has two forming surfaces which are at the same time perpendicular to the plane of the forming face, wherein the pressing element is adapted to displace the forming face of the punch in two axes, a vertical and a horizontal one.

It is preferable that the forming face comprises at least one forming roller adapted to form a weld in the course of pressing the forming face or in the course of releasing the pressure of the forming face, preferably the forming face comprises at least one smoothing roller adapted to smooth the surface of the weld in the course of pressing the forming face or in the course of releasing the pressure of the forming face, wherein preferably the forming roller is heated or the smoothing roller is heated, wherein the heating of the forming roller or the smoothing roller does not act to weld but to facilitate the forming by preventing the surface of the weld from cooling too quickly.

It is preferable that the forming face comprises tongues or grooves creating a regular pattern adapted to form a weld in the course of pressing the forming face or in the course of releasing the pressure of the forming face. Preferably, the forming face comprises a plurality of elongate tongues laid at an angle to the longitudinal axis of the forming face, adapted to smooth the surface of the weld in the course of pressing the forming face or in the course of releasing the pressure of the forming face. During the pressing of the forming face, there occurs a movement towards the above tongues that forms the surface of the weld of the cooling elements being welded by evening the surface of the weld. The forming face may be heated to a temp. of 20-300°C. Reducing the contact by the use of the tongues in the forming face allows for slowing down of the cooling and a more precise forming. Thanks to this, it is possible to precisely direct the material in the desired direction defined by the angle of inclination of the tongues relative to the longitudinal axis of the forming face. Preferably, the forming face comprises an elongate protrusion along the longitudinal axis of the forming face for forming a recess in the weld being formed.

A heating plate module for welding profiles of window or door frames, according to the present invention, comprises a heating plate, wherein the heating plate comprises a first heater surface and a second heater surface parallel thereto, and a heating element arranged substantially between the first heater surface and the second heater surface such that it provides a heat flow. The heating plate module according to the present invention is characterized in that it further comprises vibrating means constituting an oscillation generator module of the heating plate which is connected to the heating plate and is adapted to set the forming face into oscillations. The oscillation generator module of the heating plate (vibrations) may be arranged directly on the heater element as well as on a heater-positioning element - a fastening of the heating plate - rigidly connected to the heating plate in a welding head of a machine for welding profiles.

Preferably, the first heater surface and the second heater surface have tongues or grooves, wherein the tongues on one of the heater surfaces correspond to the grooves on the other one and create a complementary concave-convex pattern. Preferably, the heater surfaces are corrugated, preferably possess corresponding concavities and convexities in the form of straight lines parallel or skew to the edges of the profile, or broken lines, arcs, and others, in order to provide a larger contact surface of the profiles being connected. Preferably, the contact surfaces are inclined at an angle of at least 45 degrees relative to the edges of the profile.

It is preferable that the width of the groove amounts to from 0.5 to 5 mm, preferably 1.2 mm, wherein the respective tongues have a different shape than the profile of the grooves. The groove is narrower than the tongue by a distance in a range from 0 to 0.5 mm, preferably of 0.05 mm, in particular the grooves have, in the section, a broken-straight edge, whereas the tongues have, in the section, a continuous-curve edge. Preferably, in the section, the edge of the curve of the tongue possesses a radius in a range from 0 to 2 mm, preferably of 0.5 mm. The space resulting between the edge of the tongue and the corresponding groove, when they are pressed, amounts to from 0 to 1 mm, preferably 0.1 mm. Preferably, preferably the heating plate is covered with a high-temperature resistant non-stick coating, preferably comprising Teflon, or is made from ceramics with non-stick characteristics.

A machine for welding profiles, especially of PVC window or door frames, according to the present invention comprises a base, at least one welding head which comprises a positioning arrangement and pressing means adapted to receive the profiles being welded and press them mutually in the course of the welding, wherein the welding head comprises a heating plate module and overfill outflow limiting means. The machine for welding profiles, especially of PVC window or door frames, according to the present invention is characterized in that the welding head comprises vibrating means such that the heating plate module constitutes the module according to the present invention and/or the overfill outflow limiting means are at the least one weld-forming punch according to the present invention. The machine for welding profiles according to the present invention enables the full cycle of connecting the profiles in the welding process to be performed utilizing the oscillations both in the heating plate module and in the outflow limiting means, either in the heating plate module itself or in the outflow limiting means themselves.

A method for welding profiles, especially of window or door frames, using the machine for welding profiles according to the present invention comprises:
a) Arranging suitably prepared profiles for welding in the positioning arrangement, wherein pressing means are in an extended position. Appropriate preparing of the profile includes evening the contact surfaces which are welded to each other. Most often, just before the further steps of the process, milling is used for this purpose. It should also be emphasized that the appropriate precision in placing the positions of the profiles of the positioning system and the mutual laying of the profiles, and the pressing means are of key importance for the quality of the welding results obtained.
b) Introducing the heating plate through the heating plate module between the welding planes of the profiles. The heating plate module preferably comprises suitable means for manipulating the heating plate in the form of guides and driving means. The driving means may be actuators, a servo drive, racks and driven gears. Thanks to the automation of the process, placing the heating plate in the working position and withdrawing it progress at a high speed, which is important so that the warmed up profiles do not lose the temperature suitable for their connection.
c) Pressing the profiles using the pressing means for pressing the profiles to the heating plate. Preferably, in this step, the heating plate is heated to a working temperature and once the profiles have been pressed to it, it transfers heat to the contact surface of the profiles, causing a plasticization of the material of the profiles.
d) Pulling apart the profiles, e.g. using the pressing means for pressing the profiles, and taking out the heating plate to its resting position in the heating plate module. Due to the speed of the operation, the material of the profiles does not lose its plastic properties.
e) Contacting the contact surfaces of the profiles with each other using the pressing means with a predefined force and pressing the overfill outflow restricting means in the area of the weld. In the course of pressing the profiles at the contact location of the contacts surface of the profiles, a weld is formed and potentially an overfill may appear, but this phenomenon is limited by the overfill outflow restricting means which are pressed simultaneously with the contacting of the profiles or in sequence upon this contacting.
f) Cooling the weld.
g) Releasing the pressing means and removing the welded profiles,

The method for welding according to the present invention is characterized in that in the step c), with the simultaneous pressing of the profiles to the heating plate, and/or in the step e), during the pressing of the overfill outflow limiting means, followed by a setting of the vibrating means into oscillatory vibrations.

It is preferred that the heating plate oscillates with oscillations with an oscillation amplitude which amounts to from 0.001 mm to 5 mm, more preferably from 0.05 mm to 0.5 mm, most preferably from 0.01 mm to 1 mm, wherein preferably the heating plate oscillates with oscillations with an oscillation frequency amounting to 2 - 2000 Hz, preferably 5 - 1000 Hz, most preferably from 10 to 900 Hz.

The optimal vibratory oscillation and frequency amplitudes of the elements depend on the particular material, it is preferred to use cycles with a variable frequency, which allows for controlling different aspects of the welding and shaping in different phases of the process. When welding several kinds of plastics at once, such as rubber in conjunction with plastic materials, e.g., in window profiles, two materials are subjected to welding at once. It is also possible that there exist more materials being welded at the same time - a core from a plastic material and a gasket from rubber materials.

High frequencies (above: 1000Hz) are used when it is necessary to precisely shape the material and obtain fine details. In order to obtain a uniform through-mixing of the material of the elements being connected, while maintaining the precision of the shape, it is most preferable to use a range from 10 to 900 Hz.

It is preferable that the method for welding comprises, after the step a), a step a1) of milling the profiles in order to even the cutting imperfections of the elements being welded, more preferably chamfering of at least a part of the outer edges of the profile is also milled. Additional chamfering provides a better aesthetic effect, therefore it is sufficient for it to be made only on those parts of the product which will be visible during usage.

It is preferable that the method for welding comprises, after step a), alternatively to the step a1), a step a2) of evening the profiles by pre-shaping the contact surfaces of the profiles by pre-pressing them to the heating plate, wherein the contact surface is formed in accordance with a concave-convex pattern, wherein the oscillation amplitude is chosen such that the pattern does not undergo deformation in the course of the heating and oscillating of the heating plate. The advantage of such a method for preparing of profiles for welding is a reduction in the risk of the welding location being contaminated with scraps resulting during the milling.

It is preferable that in the method, in the steps c) and e), the time of pressing the profiles to each other or to the heating plate depends on the temperature and amounts to, at a temperature of at least 200 C, from 10 to 60 s, preferably, at a temperature of at least 290°C, from 5 to 30 s, more preferably, at a temperature of 300°C, from 2 to 20 s.

Preferably, in the step c), there occurs a shaping of the contact surfaces of the profiles with the heating plate in accordance with the concave-convex pattern, wherein the oscillation amplitude is chosen such that the pattern does not undergo deformation in the course of the heating and oscillating of the heating plate. The concave-convex pattern on the contact surfaces enables to increase this contact surface, improves the mutual through-mixing of the plasticized material being welded and provides better mechanical parameters of the obtained connection. The concave-convex pattern also has an influence on the speed of plasticization of the material in the area of the contact surface of the profiles, which complements the beneficial effects associated with the use of oscillations. It should be emphasized that it is preferable that the oscillation amplitude is chosen such that the pattern does not undergo abrasion. The temperature source is a heating element arranged between the first heater surface and the second heater surface of the heating plate.

It is preferred that in step e), during the pressing of the overfill outflow limiting means, in the form of the forming punches according to the present invention, in the area of the weld, they are set into oscillations by the oscillation generator module of the forming face in the pressing element of the forming punch and simultaneously pressed in at least one direction by this pressing element. Preferably, the forming punches are heated to a temperature in a range of 80 to 300°C, more preferably to a temperature of 80 to 150°C. Preferably, the step of pressing the overfill outflow limiting means in the area of the weld is repeated by feeding out and refeeding in the overfill outflow limiting means, while simultaneously pressing them in the area of the weld.

It is preferable that in the step e) of the method, during the pressing of the forming punches, they are pressed in two directions, in a vertical direction towards the profile and in a horizontal direction towards the interior of the profile. If the part comprising the forming roller is pressed first, then in the course of being displaced in the second direction, it will form a weld by rolling over it. In the farthest position, the force exerted simultaneously in the two directions provides the formation of the very corner of the profiles being welded. Preferably, there occurs a forming of the weld with at least one forming roller which rolls over the surface of the weld when the material being welded still has plastic properties. Preferably, there also occurs a smoothing of the surface of the weld with at least one smoothing roller which is arranged next to the forming roller, wherein it has a different cross-section adapted for smoothing in the course of pressing the forming face. Forming and smoothing the welding may occur both in the course of pressing and in the course of releasing the pressure of the forming face, wherein preferably the forming roller is heated or the smoothing roller is heated. Heating the rollers provides slowing down of the cooling of the weld in the area processed by the rollers, i.e. in the area which will be visible later in the course of usage of the welding product, and thus in the area for which the aesthetics of the obtained weld is of the greatest importance.

The present invention consisting in the use of vibrating means in the welding of windows from plastic materials may significantly reduce the risk of microgaps resulting in the area of the weld. Thanks to a uniform and controlled temperature distribution and homogenisation of the pressure on the area of the weld, the material undergoes a smooth deformation, which minimizes the resulting of the microgaps. Moreover, the process allows to obtain a better finish of the corners and planes of the joint, which improves the aesthetics and durability of the windows.

The vibrational-heater element forming the planes of the elements being connected also reduces the friction during the forming, which allows to reduce the deformation of the elements during the welding. Thanks to this, the risk of the microgaps and other imperfections resulting in the connection is reduced, which translates into a higher quality and durability of the connection. Reducing the friction during the forming also allows to obtain a more aesthetic finish of the corners and planes of the joint, which is particularly important in the case of producing windows from PVC, where the final appearance is an important factor determining the attractiveness of the product to customers.

When using the vibroforming punches, it is not required to change the instrumentation to weld frame profiles with different profile heights, which enables to fully automate the welding cycle without the operator intervening in the replacement of the instrumentation. This applies to profiles with a rectangular sectional geometry, the height of the profile is of no significance due to the fact that the forming punches shaping the weld are pressed simultaneously from the bottom and from the top, and to the outer edge of the corner being formed. The device can act to weld profiles with different dimensions without the necessity to replace the instrumentation.

The use of the welding by means of the heating plate module with a oscillation generator enables to increase the welding temperature of the profiles to 300 degrees C. In the prior art, a temperature of from 230 to 250 °C is typically used. Raising the temperature enables to further decrease the time of the welding cycle and to reduce the risk of overheating the material, as well as to improve the mechanical properties of the weld by a better mutual remelting of the material of the profiles being welded.

The embodiments of the present invention are shown in the accompanying drawings in which:
Fig. 1 shows the key elements of the device for welding profiles,
Figs. 2 A and B show the heating plate of the heating plate module in a working position with the pressed profiles for welding in an axonometric view and in a side view,
Fig. 3 shows the overfill limiting means in the form of the forming punch according to the present invention,
Figs. 4 A, B and C show, in axonometric views, the forming punch in a first position, when pressing in an vertical direction,
Figs. 5 A and B show, in a side view and in a top view, respectively, the forming punch in the first position,
Figs. 6 A, B and C show, in axonometric views, the forming punch in an intermediate position, when pressing in the vertical direction and to the center of the profile - in the course of forming the weld with the forming and smoothing roller,
Figs. 7 A and B show, in an axonometric view and in a plan view, respectively, the forming punch in an end position, when pressing in two directions, the vertical one and to the center - in the course of forming the corner of the profiles being connected,
Fig. 8 shows the forming face of the forming punch with the tongues,
Fig. 9 shows the forming face of the forming punch with the tongues and grooves,
Fig. 10 shows a cross-section through the surfaces of the heating plate, wherein the drawing shows the surfaces contacted to each other in order to present the relative dimensions - these are, in use, the two outer surfaces of the heating plate,
Fig. 11 shows the two heater surfaces next to each other with a marking of the pattern being created by the tongues and grooves.

The first embodiment relates to a heating plate module 1 for welding the profiles 2 window frames which comprises a heating plate 10 with a substantially cuboid shape, wherein the heating plate 10 comprises a first heater surface 11 and a second heater surface 12 parallel thereto. A heating element is arranged between the first heater surface and the second heater surface such that it provides a heat flow to both heater surfaces. The heating element in the embodiment is a resistance wire which heats the heating surface under the influence of a flowing current with an appropriate intensity. A person skilled in the art understands that the heating element may be other heat sources which will ensure a sufficiently high temperature of the heater surfaces. The heating plate module comprises a positioning element which enables the heating plate 10 to be quickly displaced from a resting position to a working position and back again. The positioning element provides the heating plate with adequate freedom of movement so as not to dampen the oscillations into which the heating plate is set by the oscillation generator module 13 of the heating plate. The oscillation generator module 13 of the heating plate is connected to the heating plate 10 and is adapted to set the heating plate 10 into oscillations. The oscillation (vibration) generator module 13 of the heating plate may be arranged directly on the heating element as well as on a heater positioning element rigidly connected to the heating plate, which is understandable for a person skilled in the art.

The oscillation amplitude and frequency are dependent on other process parameters, such as the material from which the profiles 2 are made, the temperature of the heating plate, the shaping of the heater surfaces, the time and force of pressing the profiles 2 to the heating plate 10.

By way of example, the oscillation generator module 13 of the heating plate sets the heating plate 10 into oscillations with an oscillation amplitude which amounts from 0.001 mm and a frequency of 1 Hz, while heating the heating plate 10 to a temperature of 200°C. In another aspect of the embodiment, the oscillation generator module 13 of the heating plate sets the heating plate 10 into oscillations with an oscillation amplitude which amounts from 0.2 mm and a frequency of 2 Hz, while heating the heating plate 10 to a temperature of 300°C. In another aspect of the embodiment, it is an amplitude of 0.05 mm, with a frequency of 1 kHz and a temperature of 250°C, and in yet another aspect, it is 0.01 mm, 900 Hz and 300°C, respectively. In another aspect of the embodiment, the cycle value is 31000 VPM (vibration per minute, about 516 Hz), with the temperature of the heating plate 10 in a range from 210 to 280°C. The temperature of the heating plate is regulated in a feedback loop with the temperature sensor, therefore the temperatures of the plate is characterized by a certain variability (temperature hysteresis) in the course of the working cycle. The oscillation amplitude of 0.001 mm to 0.05 mm.

The setting of the heating plate into oscillations was observed to improve the plasticity of the material in the vicinity of the contact surfaces of the profiles 2. The temperature propagates better from the heater surface of the heating plate 10 towards the depth of the profile when the plate is being subjected to the oscillations. It should be emphasized that the oscillations do not constitute a source of friction, as in the oscillatory welding method known from the prior art in which the heating of the contact surfaces being joined was obtained by rubbing them against each other or against an intermediate friction element. Thanks to the oscillations, one can use both lower temperatures of the weld, thanks to an improved penetration of plasticity, and higher temperatures which enable to dramatically shorten the heating time without the risk of overheating the material, while providing an appropriate degree of plasticization of the material.

In an aspect of the embodiment, the first heater surface 11 and the second heater surface 12 have tongues 14 or grooves 15. The tongues (14) on one of the surfaces correspond to the grooves 15 on the other one and create a concave-convex pattern. By way of example, the heater surfaces 11 and 12 are corrugated. The corresponding concavities and convexities provide larger contact surfaces 21 of the profiles 2 being connected. This increases the degree of through-mixing of the plasticized material in the area of the weld, which has a significant influence on increasing the mechanical resistance of the produced connection and increasing its durability.

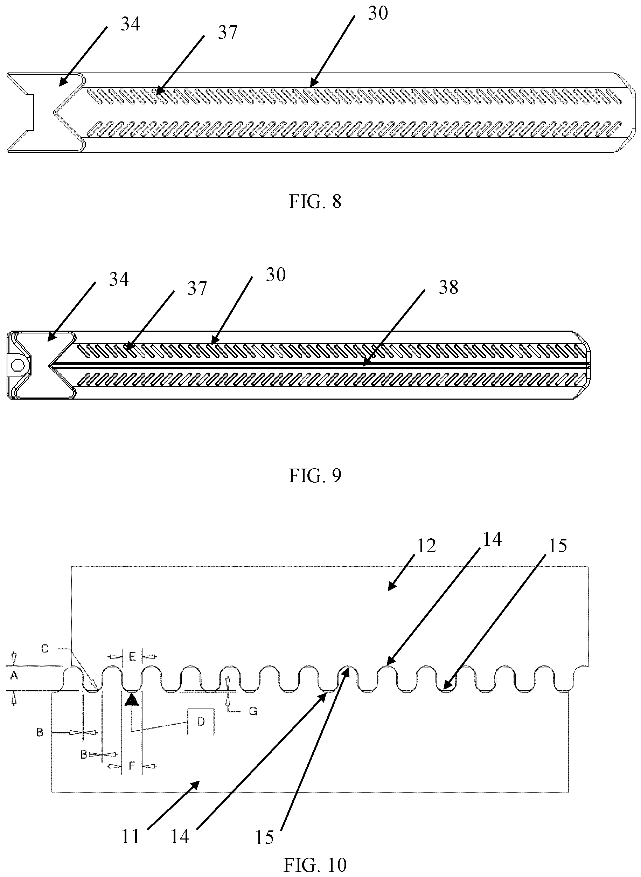

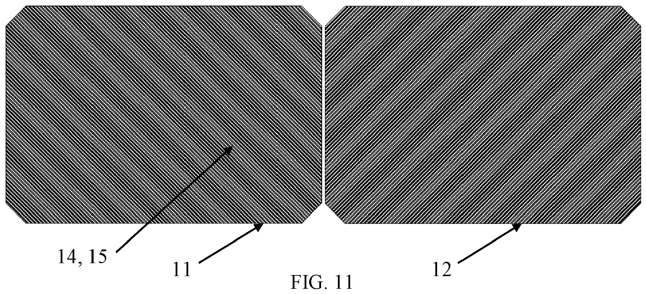

In an aspect of the embodiment disclosed in Fig. 10 and Fig. 11, the width of the groove A amounts to from 0.5 to 5 mm, by way of example 1.2 mm, wherein the respective tongues have a different shape than the profile of the grooves. The groove with a dimension E is narrower than the tongue with a dimension F by a distance B in a range from 0 to 0.5 mm, by way of example, of 0.05 mm. The shape of the profile of the tongue 14 does not correspond to the shape of the groove 15, in particular the grooves 15 have, in the section, a broken-straight edge, whereas the tongues 14 have, in the section, a continuous-curve edge (Fig. 10). In the cross-section, the edge of the curve of the tongue 14 possesses a radius in a range from 0 to 2 mm, by way of example, of 0.5 mm. The tongues 14 and grooves 15 create a corrugated pattern inclined at an angle of from 0 to 90 degrees, by way of example, 45 degrees (Fig. 11).

Such a shape of the heating plate is reflected in the shape of the profiles being welded, and in the course of pressing the profiles, the reflected tongues and grooves interact with each other by creating a weld. During the pressing the welded elements of the profiles, the spaces marked with the letters D and B are filled (Fig. 10), creating a homogeneous connection. The space resulting between the edge of the tongue reflected in the profile and the corresponding groove, when they are pressed, amounts to from 0 to 1 mm, by way of example, 0.1 mm.

In an aspect of the embodiment, the heating plate is coated with a high-temperature resistant non-stick coating comprising Teflon. In another aspect, it is made from ceramics with non-stick characteristics.

The second embodiment relates to a weld-forming punch. The weld-forming punch belongs to the means limiting the overfill outflow in the area of the weld by limiting the space in which such an outflow takes places. The overfill of the weld 4 resulting when welding the profiles 2 of window frames is typically limited from the outside, and a possible overflow is allowed inside the profile. However, the challenge is to limit the overfill in such a way that it would enable at the same time to obtain a weld with appropriate aesthetic qualities, while maintaining its mechanical properties. The punch 3 for forming a weld according to the embodiment comprises a forming face 30 and a pressing element 31, wherein the pressing element 31 comprises an oscillation generator module 33 of the forming face which is adapted to set the forming face 30 into oscillations. As it turned out, the use of the oscillation generator in the weld-forming punch enabled to maintain the plasticity material of the weld for the duration of its formation by means of the weld-forming punch.

In an aspect of this example, the weld-forming punch 3 comprises a heater module which heats the surface of the forming face 30. It was discovered that in the case of the weld-forming punches, the temperatures do not have to be as high as for the heating plate 10. The weld-forming punches achieve temperatures in a range of 30 to 80, by way of example, of 45°C degrees, and in another aspect of the embodiment, temperatures in a range of 80 to 150°C. This provides the suitable conditions for slower cooling of the weld during its formation. At the same time, the use the a oscillation generator allowed to significantly shorten the time of forming the weld, and thus shorten the required cooling time of the weld.

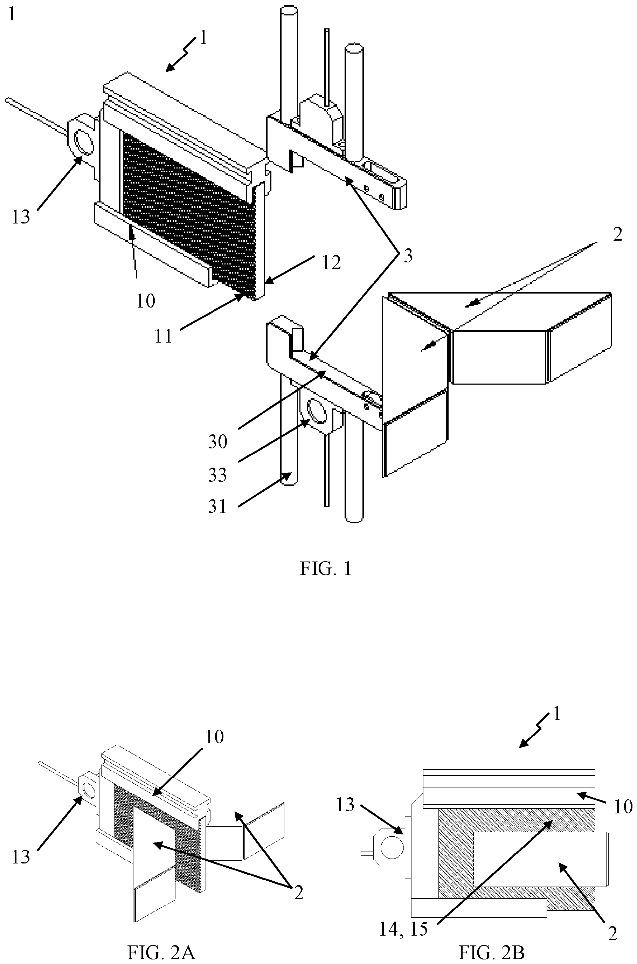

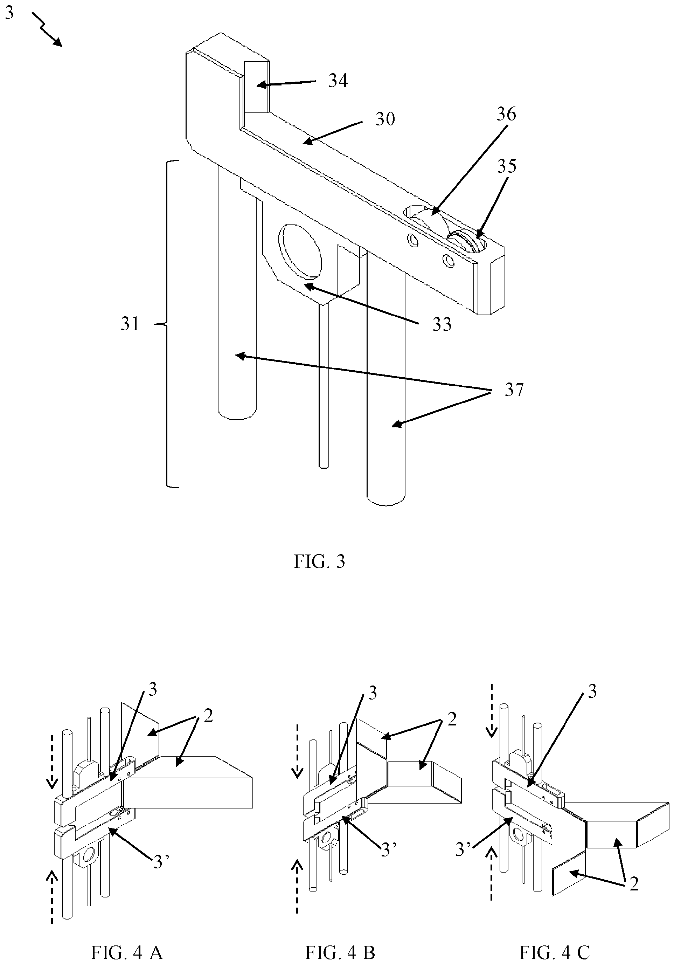

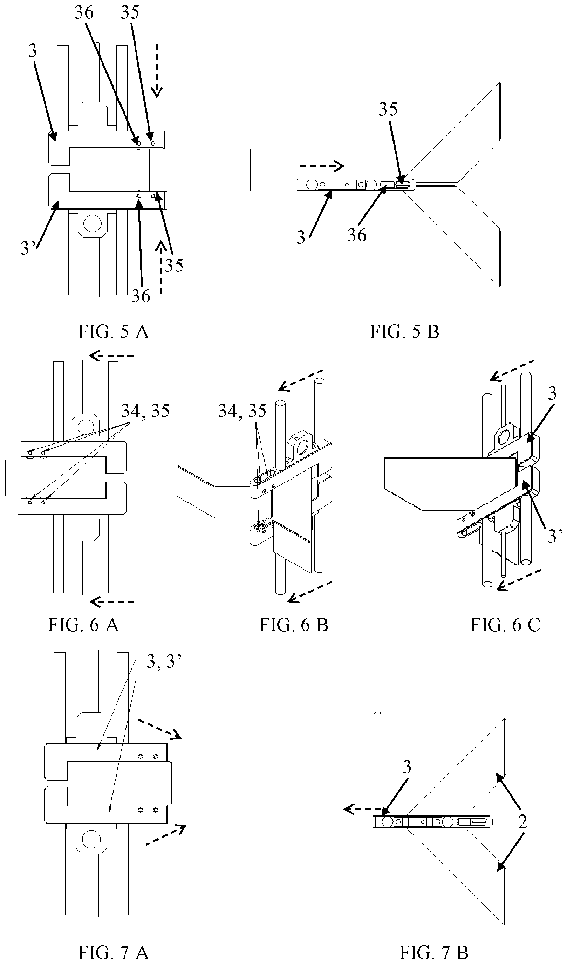

The weld-forming punch 3 in the embodiment shown in Fig. 3 comprises a forming face 30 and comprises a protrusion 34 for forming a corner of the profiles being welded. The projection 34 has two perpendicular forming surfaces which are at the same time perpendicular to the plane of the forming face 30 and are disposed at an angle of 45 degrees relative to the longitudinal axis of the forming face 30. It is worth emphasizing that in practical use, two forming punches are used acting at least partially in opposition to each other on both sides of the profile, as shown in Fig. 1, Figs. 4 A, B and C, Fig. 5 A, Figs. 6 A, B and C and in Fig. 7. Thanks to the use of two separate forming punches 3 and 3', it is not required to change the weld-forming punches in the event of a change in the height of the profiles being welded - profiles with a different height can thus be welded on the same station, which significantly reduces the number of necessary handling actions at the station. In the drawings of Figs. 4-7, the dashed arrow symbolizes the direction of displacement and/or pressure of the weld-forming punch.

The weld-forming punch in the embodiment has a pressing element 31 which is adapted to displace the forming face 30 of the weld-forming punch 3 in two axes by means of guides 37. Figs. 4 and 5 show the punch in a first position in which the weld-forming punch 3 and 3' is pressed in a vertical direction towards the profile. Fig. 6 shows the weld-forming punch 3 and 3' in an intermediate position, when pressing in the vertical direction and to the center of the profile - in the course of forming the weld with a forming roller 35 and a smoothing roller 36. The rollers displace themselves along the weld while pressing and smoothing it. Fig. 7 shows the forming punch in an end position, when pressed in two vertical directions, to the profile and to the center towards the interior of the profile. In this position, there occurs a forming of the corner of the profiles being connected, the forming face 30 contacts the weld, and both rollers are situated outside the outline of the profile.

The forming roller 35 is adapted to form the weld 4 in the course of pressing the forming face 30 or in the course of releasing the pressure of the forming face 30 - this is determined by the sequence of pressing and displacing the forming punch 3 and 3'. In an aspect of the embodiment, the forming face 30 comprises one smoothing roller 36 adapted to smooth the surface of the weld in the course of pressing the forming face 30 or in the course of releasing the pressure of the forming face 30, and one weld-forming roller 35. In yet one aspect of the embodiment, the forming roller 35 is heated and the smoothing roller 36 is heated.

The weld-forming punch in an aspect of the embodiment comprises tongues and grooves on the surface of the forming face 30 (Fig. 9) creating a regular pattern adapted to form a weld in the course of pressing of forming face or in the course of releasing the pressure of the forming face. An exemplary regular pattern is shown in Fig. 8 and Fig. 9. The forming face comprises a plurality of elongate tongues laid at an angle to the longitudinal axis of the forming face. They are adapted to smooth the surface of the weld in the course of pressing the forming face. The tongues may be directed in every possible direction depending on the assumed effect. Most preferably, at 45 degrees in the movement direction of the forming face 30. It should be noted that the smaller the angle, the smaller the contact surface with the material, which is beneficial with a view to the reduction of friction of the element against the surface of the warmed up profile. During the pressing of the forming face, there occurs a movement towards the tongues that forms the surface of the weld of the cooling elements of the profiles being welded and evens the surface of the weld. The forming face 30 is heated to temps. in a range of 20-150°C, by way of example, of 80°C. Reducing the contact by the use of the tongues in the forming face allows for slowing down of the cooling and a more precise forming of the weld. Thanks to this, it is possible to precisely direct the material in the desired direction defined by the angle of inclination of the tongues relative to the longitudinal axis of the forming face. The forming face 30 in Fig. 9 comprises an elongate protrusion 39 along the longitudinal axis of the forming face for forming a recess in the weld being formed. During movement, the grooves are able to form over the outer edges of the molten material at the edge of the profiles being welded towards the inside of the profile being welded, causing the greater part of the overfill to be formed in the inner space of the profiles being welded, and thus be less visible in the final welding product.

Both the heating plate module 1 and the weld-forming punch 3 can be used independently in the known devices for welding window or door profiles. However, their combined use yields the best results. In the third embodiment, a device for welding profiles 2 of PVC window or door frames is shown comprising a base, one welding head which comprises a positioning arrangement and pressing means adapted to receive the profiles 2 being welded and press them mutually in the course of the welding, and the heating plate module 1 according to the first embodiment, and overfill outflow limiting means in the form of the weld-forming punches 3 and 3' according to the second embodiment.

In the fourth embodiment a method for welding profiles of PVC window or door frames is shown comprising:
a) Arranging suitably prepared profiles 2 or welding in the positioning arrangement, wherein the pressing means are in an extended position.
b) Introducing the heating plate 1 through the heating plate module 10 between the welding planes of the profiles 2.
c) Pressing the profiles 2 using the pressing means for pressing the profiles to the heating plate 10, while setting the heating plate 10 into oscillations, by the oscillation generator module 13 of the heating plate, with an oscillation frequency of 1 Hz, 2 Hz, 900 Hz, 20 kHz, and an oscillation amplitude of, by way of example, 0.01 mm, 0.02 mm, 0.05 mm, 0.1 mm, 0.5 mm,
d) wherein the heating plate 10 is heated to a temperature of at least 250°C, by way of example 280°C, and the profiles are pressed to each other for at least 2 s. In this step, there occurs a shaping of the contact surfaces of the profiles with the heating plate in accordance with the concave-convex pattern, by way of example, the heater surfaces are corrugated, wherein the oscillation amplitude is chosen such that the pattern on the contact surface of the profiles does not undergo deformation in the course of the heating and vibrating of the heating plate 10.
e) Pulling apart the profiles 2 and taking out the heating plate 10.
f) Contacting the profiles 2 with each other using the pressing means with a predefined force and simultaneously pressing the overfill outflow restricting means 3 in the area of the weld. During the pressing of the overfill outflow limiting means 3, in the form of the forming punches 3 set out in the second embodiment, in the area of the welds with a force of from 1 to 1500 Nm, by way of example 100 Nm, they are set into oscillations and simultaneously pressed in two directions, in a vertical direction to the profiles and in a horizontal direction to the interior of the corner between the profiles. The forming punches 3 are heated to a temperature of 20°C, 40°C, 60°C, 80°C, 90°C, 100°C, 125°C or 150°C. The step of pressing the overfill outflow limiting means 3 in the area of the weld is repeated by feeding out and refeeding in the overfill outflow limiting means 3, while simultaneously pressing them in the area of the weld.
g) Cooling of the weld.
h) Releasing the pressing means and removing the welded profiles.

In an aspect of this embodiment, the step a) is followed by a step a1) in which the profiles are milled in order to even the cutting imperfections of the elements being welded (profiles). Chamfering of at least part of the outer edges of the profile is also milled in order to reduce the effect of an overfill resulting on the outer side of the profile being welded. In a further aspect of the fourth embodiment, the step a) is followed by a step a2) of evening the profiles by pre-shaping the contact surfaces of the profiles by pressing them to the heating plate, wherein the contact surface is formed in accordance with a concave-convex pattern. The oscillation amplitude is chosen such that the pattern does not undergo deformation in the course of the heating and oscillating of the heating plate.

In an aspect of the fourth embodiment, in the step e), during the pressing of the forming punches 3, they are pressed in two directions, in a vertical direction towards the profile 2 and in a horizontal direction towards the interior of the profile 2. At the same time, there occurs a forming of the weld with the forming roller 34, and then the smoothing of the surface of the weld with the smoothing roller 36 adapted for smoothing. The rollers are arranged next to each other and one follows the other. The forming and smoothing of the weld may occur in the course of the pressing the forming face 30 or in the course of releasing the pressure of the forming face 30, depending on the selected working settings of the device and the desired result. The forming roller 35 is heated and the smoothing roller 36 is heated. Heating the rollers increases the effectiveness of them forming the weld.

In the fifth embodiment, additional actions related to the welding process in a device comprising a plurality of heating heads are included, it is understandable for a person skilled in the art that in the case of automation, it is preferable that the welding is done simultaneously for all the four corners of the frame being produced. The profile-welding process described in the fourth embodiment begins with a step a) in which there occurs a locating of the profiles on the tops of the heating heads of the device.

Then, the elements of the profiles are properly evened by centering the positions of the individual elements such that they are situated between the centering elements. This involves the simultaneous movement of the drives of the tops of all the heating heads towards the centering element. Then, there occurs a venting of the actuators of the upper pressure tables (pressing means) and a free falling of the tables onto the profiles .

After this stage, there is an additional forward movement towards the centering elements by 1-2 mm in order to more accurately push the profiles to the outer edges of the tops of the pressure tables (pressing means) and to "press" the additional pneumatic sliders mounted on the upper tops of the pressure tables (pressing means) in order to pull the upper edge of the profile to the upper basis of the upper pressure table. The next step is a full pressure to the profile of the upper top of the pressure table by means of an actuator which has been previously vented. At the same time, there occurs a measurement of the temperature of the profiles in order to automatically correct the welding cycle described above. The automatic system for temperature measurement of the profiles being welded enables an automatic correction of the welding cycle characteristics.

There occurs a turnout onto the first contact position of the profile with the milling cutters chamfering the edge of the profile (stage a1). By means of the milling machines, the edges and contact surfaces of the profiles are evened. An alternative to the evening milling is to approach the heating vibrating plate and even the surface by means of the plate, and not by means of the chamfering module (step a2).

These actions are followed by the target welding by means of the vibrating plate, as described in the fourth embodiment. The first step is the entry of the heating plate into the working position (step b). The next of the steps is the approach of the profiles onto the heater-vibrating module (step c). During this approach, the heating plate also slides forward (or backward) towards the opposite head so as to compensate for the position resulting from working with the plurality of heating heads. The heating plate 10 is set into oscillatory vibrations. This treatment additionally facilitates the thermal penetration of the material being welded, causing the effect of splines (or shapes being created by heater surfaces with a different shape) being "opened", which enables a more accurate connection of the contact surface of the profiles 2 and reduces the risk of "rolling up" of the outflowing material (overfill). The material is precisely melted and formed.

An exemplary cycle time amounts to, at a temperature of 250 degrees, from 10 to 25 seconds, at a temperature of 290 degrees, from 5 to 10 sec, at a temperature of 300 degrees upwards, from 1 to 5 sec.

After the elements from the plastic have withdrawn from the heating plate 10, there occurs a backward retraction of the heating plate 10 to the resting position in order to remove the heater element from between the warmed up elements from the plastic. Immediately, there occurs a pre-pressing of the profiles to each other with the prepared (plasticized) contact surfaces.

Afterwards there occurs a forming of the upper and lower planes of the elements being connected and at least a part of the outer edge by means of the forming punches and a full closing (pressing to each other) of the profiles. During this forming, the forming punches do not cease to vibrate and can vibrate to the very end of the connection. They can also be turned off after a specific time has elapsed, while remaining in the pressure position, or work cyclically in a specific work cycle, e.g. Be actuated every 1 second per 2 sec, etc., until the desired aesthetic effect of the weld has been achieved.

In an aspect of the embodiment, there occurs a heating of the forming punch to a temperature of 80 degrees, or even 30-40 degrees, and the outer edge of the profiles are again formed over, which is also accompanied by the vibrating. Whereupon a completion of the process occurs by withdrawing the forming punches to the base position and completing the welding stage. Upon completion of the welding and cooling of the weld, the formed frame can be removed from the device.

## Claims

1. A punch (3) for forming a weld (4) resulting when welding profiles (2) of window or door frames which comprises a forming face (30) and a pressing element (31), **characterized in that** the pressing element (31) comprises vibrating means constituting an oscillation generator module (33) of the forming face which is adapted to set the forming face (30) into oscillations.

2. The punch (3) for forming a weld (4) according to claim 1, **characterized in that** it comprises a heater module which heats the surface of the forming face (30).

3. The punch (3) for forming a weld (4) according to claim 1 or 2, **characterized in that** the forming face (30) comprises a protrusion (34) for forming a corner of the profiles being welded, preferably the protrusion (34) has two forming surfaces which are at the same time perpendicular to the plane of the forming face (30), wherein the pressing element (31) is adapted to displace the forming face of the punch in two axes, a vertical and a horizontal one.

4. The punch (3) for forming a weld (4) according to claim 1 or 2 or 3, **characterized in that** the forming face (30) comprises at least one forming roller (35) adapted to form a weld (4) in the course of pressing the forming face (30) or in the course of releasing the pressure of the forming face (30), preferably the forming face (30) comprises at least one smoothing roller (36) adapted to smooth the surface of the weld in the course of pressing the forming face (30) or in the course of releasing the pressure of the forming face (30), wherein preferably the forming roller (35) is heated or the smoothing roller (36) is heated.

5. The punch (3) for forming a weld (4) according to any one of claims 1-4, **characterized in that** the forming face (30) comprises tongues (37) or grooves (38) creating a regular pattern adapted to form a weld (4) in the course of pressing the forming face (30) or releasing the pressure of the forming face (30), preferably the forming face (30) comprises a plurality of elongate tongues (37) laid at an angle to the longitudinal axis of the forming face (30), adapted to smooth the surface of the weld in the course of pressing the forming face (30) or releasing the pressure of the forming face (30), wherein preferably the forming face (30) comprises a elongate protrusion along the longitudinal axis of the forming face (30) for forming a recess in the weld being formed.

6. A heating plate module (1) for welding profiles (2) of window or door frames which comprises a heating plate (10), wherein the heating plate (10) comprises a first heater surface (11) and a second heater surface (12) parallel thereto, a heating element arranged substantially between the first heater surface and the second heater surface such that it provides a heat flow, **characterized in that** it further comprises vibrating means constituting an oscillation generator module (13) of the heating plate which is connected to the heating plate (10) and is adapted to set the heating plate (10) into oscillations.

7. The heating plate module (1) according to claim 6, **characterized in that** the first heater surface (11) and the second heater surface (12) have tongues (14) or grooves (15), wherein the tongues (14) on one of the surfaces correspond to the grooves (15) on the other one and create a concave-convex pattern, preferably the heater surfaces (11, 12) are corrugated, preferably possess corresponding concavities and convexities in the form of straight lines parallel or skew to the edges of the profile or broken lines or curves in order to provide a larger contact surface (21) of the profiles (2) being connected.

8. The heating plate module according to claim 7, **characterized in that** the width of the groove (15) amounts to from 0.5 to 5 mm, preferably 1.2 mm, wherein the corresponding tongues (14) have a different shape than the profile of the grooves (15), the groove (15) is narrower than the tongue (14) by a distance in a range from 0 to 0.5 mm, preferably of 0.05 mm, in particular the grooves (15) have, in the section, a broken-straight edge, whereas the tongues (14) have, in the section, a continuous-curve edge, preferably, in the section, the edge of the curve of the tongue (14) possesses a radius in a range from 0 to 2 mm, preferably of 0.5 mm, wherein the space resulting between the edge of the tongue (14) and the corresponding groove (15), when they are pressed, amounts to from 0 to 1 mm, preferably 0.1 mm, wherein preferably the heater surfaces (11, 12) are covered with a high-temperature resistant non-stick coating, preferably comprising Teflon or made from ceramics with non-stick characteristics.

9. A machine for welding profiles (2), especially of PVC window or door frames, comprising a base, at least one welding head which comprises a positioning arrangement and pressing means adapted to receive the profiles (2) being welded and press them mutually in the course of the welding, wherein the welding head comprises a heating plate module and overfill outflow limiting means, **characterized in that** the welding head comprises vibrating means such that the heating plate module constitutes the module set out according to anyone of claims 6-8, and/or the overfill outflow limiting means are the at least one weld-forming punch (3) set out according to anyone of claims 1 - 5.

10. A method for welding profiles, especially of window or door frames, using the machine for welding profiles according to claim 9, comprising
a) arranging suitably prepared profiles (2) for welding in the positioning arrangement, wherein the pressing means are in an extended position,
b) introducing the heating plate (1) through the heating plate module (10) between the welding planes of the profiles (2),
c) pressing the profiles (2) using the pressing means for pressing the profiles to the heating plate (10),
d) pulling apart the profiles (2) and taking out the heating plate (10),
e) contacting the profiles (2) with each other using the pressing means with a predefined force and pressing the overfill outflow restricting means (3) in the area of the weld,
f) cooling the weld,
g) releasing the pressing means and taking out the welded profiles,
**characterized in that** in the step c), with the simultaneous pressing of the profiles (2) to the heating plate (10), and/or in the step e), during the pressing of the overfill outflow limiting means, there occurs a setting of the vibrating means into oscillatory vibrations.

11. The method for welding according to claim 10, **characterized in that** the heating plate (10) oscillates with oscillations with an oscillation amplitude which amounts to from 0.001 mm to 5 mm, more preferably from 0.05 mm to 0.5 mm, most preferably from 0.01 mm to 1 mm, wherein preferably the heating plate (10) oscillates with oscillations with an oscillation frequency amounting to 2 - 2000 Hz, preferably 5 - 1000 Hz, most preferably from 10 to 900 Hz.

12. The method for welding according to anyone of claims 10 - 11, **characterized in that** the step a) is followed by a step a1) of milling the profiles in order to even the cutting imperfections of the elements being welded, preferably chamfering of at least a part of the outer edges of the profile is also milled, or
a step a2) of evening the profiles by pre-shaping the contact surfaces of the profiles by pressing them to the heating plate, wherein the contact surface is formed in accordance with a concave-convex pattern.

13. The method for welding according to any one of claims 10 - 12, **characterized in that** in the steps c) and e), the time of pressing the profiles (2) to each other or to the heating plate (10) depends on the temperature and amounts to, at a temperature of at least 200°C, from 10 to 60 s, preferably, at a temperature of at least 290°C, from 5 to 30 s, more preferably, at a temperature of 300°C, from 2 to 20 s, wherein in the step c), there occurs a shaping of the contact surfaces of the profiles with the heating plate in accordance with the concave-convex pattern.

14. The method for welding according to any one of claims 10 - 13, **characterized in that** in step e) during the pressing in the area of the weld, the overfill outflow limiting means (3) are heated to a temperature in a range of 20 to 300°C, more preferably to a temperature of 80 to 150°C, preferably the step of pressing the overfill outflow limiting means (3) in the area of the weld is repeated by feeding out and refeeding in the overfill outflow limiting means (3), while simultaneously pressing them in the area of the weld.

15. The method for welding according to any one of claims 10 - 14, **characterized in that** in step e), during the pressing of the forming punches (3), they are pressed in two directions, in a vertical direction towards the profile (2) and in a horizontal direction towards the interior of the profile (2), preferably there occurs a forming of the weld with at least one forming roller (34), preferably there occurs a smoothing of the surface of the weld with at least one smoothing roller (36) adapted for smoothing, wherein the forming and smoothing may proceed in the course of pressing the forming face (30) or in the course of releasing the pressure of the forming face (30), wherein preferably the forming roller (35) is heated or the smoothing roller (35) is heated.
